(19)

**Europäisches Patentamt**
**European Patent Office**
**Office européen des brevets**

(11) **EP 1 956 389 A1**

(12) **EUROPEAN PATENT APPLICATION**

(43) Date of publication:
**13.08.2008 Bulletin 2008/33**

(51) Int Cl.:
**G01S 13/58** (2006.01)   **G01S 13/34** (2006.01)
**G01S 13/38** (2006.01)   **G01S 13/93** (2006.01)

(21) Application number: **08150801.2**

(22) Date of filing: **29.01.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **02.02.2007 JP 2007024667**

(71) Applicant: **Omron Corporation**
**Kyoto-shi, Kyoto 600-8530 (JP)**

(72) Inventors:
• **Ichiyanagi, Hoshibumi**
  **Kyoto-shi, Kyoto 600-8530 (JP)**

• **Takenouchi, Shinya**
  **Kyoto-shi, Kyoto 600-8530 (JP)**
• **Satoh, Yasuhiro**
  **Kyoto-shi, Kyoto 600-8530 (JP)**
• **Numata, Hiroyuki**
  **Kyoto-shi, Kyoto 600-8530 (JP)**

(74) Representative: **Brochard, Pascale et al**
**Osha Liang**
**121, avenue des Champs Élysées**
**75008 Paris (FR)**

(54) **Dual frequency CW radar**

(57)    The measurement of the distance or/and the relative velocity with fast response is to be achieved while the accuracy of measurement of the distance to an object in close range is maintained. A calculation-execution determination section determines whether or not an object is present within a predetermined range from the strength of a two-frequency Doppler signal sent from an A/D converting section and past calculated distance sent from a calculation selecting section. If the object is outside the predetermined range, the distance calculated by an FFT-method calculating section is output from a calculation output section via an calculation selecting section. If the object is within the predetermined range, one of the distance calculated by a time-interval-method calculating section and the distance calculated by the FFT-method calculating section is selected by the calculation selecting section, and is output from the calculation output section. The invention can be applied to a fast response system such as a precrash system.

*FIG. 1*

**Description**

BACKGROUND OF THE INVENTION

1. Field of the Invention

The present invention relates to an apparatus and a method for measuring the distance or the relative velocity to an obj ect, and more particularly, to an apparatus and a method for measuring the distance or/and the relative velocity with fast response even if an object comes within close range.

2. Description of Related Art

Known sensors for measuring the relative velocity or distance between a host vehicle and another vehicle include a continuous wave (CW) radar, an FMCW radar, and a two-frequency continuous wave (CW) radar (hereinafter, referred to as a two-frequency CW radar) (refer to Japanese Patent No. 3203600 and JP-A-2004-69693 (Patent Documents 1 and 2)) . Among them, the two-frequency CW radar measures the relative velocity and the distance to another vehicle by detecting the frequency (hereinafter, referred to as a Doppler frequency) or the phase of the Doppler signal of a signal reflected by the object.

Vehicles (host vehicles) are equipped with an adaptive cruise control (ACC) system capable of automatic follow-up while maintaining the distance to a preceding vehicle (another vehicle) using a sensor such as a two-frequency CW radar. Recent vehicles are also equipped with a precrash system for detecting a credible crash (precrash) between a host vehicle and another vehicle using such a sensor as the two-frequency CW radar to reduce the impact of the crash.

Recent vehicles are equipped with multiple systems for different purposes using signals from sensors.

Such systems are required to have fast responsiveness while maintaining high accuracy for measurement of the distance to another vehicle that comes within close range.

However, sensors using fast Fourier transform (FFT) analysis such as the related-art two-frequency CW radar have the problem of low responsiveness because the analysis takes much time. Therefore, the related-art sensors cannot sufficiently meet the above-described requirement if another vehicle (object) comes closer than a predetermined range.

SUMMARY OF THE INVENTION

The invention is made in view of such a problem, accordingly, an object of the invention is to achieve fast-response distance measurement or/and relative-velocity measurement.

A measuring apparatus according to a first aspect of the invention is a measuring apparatus that measures at least one of the relative velocity and the distance to an object using a mixed signal generated by mixing a transmission signal of a continuous predetermined frequency and a wave reflected from the object. The measuring apparatus includes: a determining section that determines whether or not the object is present within a predetermined range; a first operating section that calculates at least one of the relative velocity and the distance by a time interval method; and a second operating section that calculate at least one of the relative velocity and the distance by a second method different from the time interval method.

This allows fast-response distance measurement and relative-velocity measurement even if an object comes within close range.

Examples of the measuring apparatus are a continuous wave (CW) radar, an FMCW radar, and a two-frequency CW radar.

Examples of the determining section, the first operating section, and the second operating section are configured by a microcomputer, a calculation control circuit, or a combination thereof. In this case, there is no need to configure the components in separate units (for example, a circuit board); some of the means may be combined in one unit. Conversely, one means may not necessarily be configured in one unit and may be divided into several units.

The mixed signal is a Doppler signal. If it is determined by the determining section that the object is present within the predetermined range, the first operating section detects the frequency of the Doppler signal and calculates the relative velocity to the object using the frequency.

The transmission signal includes a first transmission signal having a first frequency and a second transmission signal having a second frequency. The mixed signal includes a first Doppler signal generated from the first transmission signal and a second Doppler signal generated from the second transmission signal. If it is determined by the determining section that the object is within the predetermined range, the first operating section detects the phase difference between the first Doppler signal and the second Doppler signal and calculates the distance to the obj ect using the phase difference.

This allows a two-frequency continuous-wave (CW) radar to be employed as a measuring apparatus.

If the strength of the first Doppler signal or the second Doppler signal becomes higher than a predetermined strength, the determining section determines that the object is present within the predetermined range.

This reduces the load on the calculation control means due to such determination, allowing simplification of the structure of the calculation control means and reduction of cost.

If the waveform of the first Doppler signal or the second Doppler signal is saturated, the determining section determines that the object is present within the predetermined range.

This eliminates the need for the related-art amplifier gain control that has been triggered when an object comes within close range.

If the distance to the object calculated by the second operating section is shorter than a predetermined range, the determining section determines that the object is present within the predetermined range.

This reduces the load on the calculation control means due to such determination, allowing simplification of the structure of the calculation control means and reduction of cost.

The second method is a fast Fourier transform (FFT) method whereby the phase difference is detected by applying FFT analysis to the first Doppler signal and the second Doppler signal.

This allows measurement of the respective distances to multiple objects even if the objects are present in long range.

If the determining section determines that the object is present within the predetermined range, the second operating section further calculates the distance to the object. The measuring apparatus further includes a third operating section that outputs one of the calculation by the first operating section and the calculation by the second operating section as the distance to the object.

This further increases the accuracy of distance measurement.

The first operating section or the second operating section detects at least one of the Doppler frequency of the first Doppler signal and the Doppler frequency of the second Doppler signal and calculates the relative velocity of the obj ect using the detected Doppler frequency.

This allows not only the distance to an object but also the relative velocity to be output.

A measuring method according to a second aspect of the invention is for the measuring apparatus according to the first aspect of the invention.

As described above, the invention allows distance measurement and/or relative-velocity measurement, and more particularly, allows fast-response distance measurement even if an object comes within close range.

BRIEF DESCRIPTION OF THE DRAWINGS

Fig. 1 is a block diagram of a two-frequency CW radar that is a measuring apparatus incorporating the invention.
Fig. 2 is a diagram illustrating an example of a method for dividing a Doppler signal having two Doppler frequencies $\Delta f1$ and $\Delta f2$.
Fig. 3 is a diagram illustrating an FFT method.
Fig. 4 is a diagram showing a state in which a signal reflected by an object in close range is received as a saturated reception signal.
Fig. 5 is a diagram illustrating a time interval method.
Fig. 6 is a diagram illustrating the time interval method.
Fig. 7 is a diagram illustrating the characteristic of the time interval method.
Fig. 8 is a diagram illustrating the characteristic of the time interval method.
Fig. 9 is a diagram illustrating the characteristic of the time interval method.
Fig. 10 is a flowchart for an process example of the operation control section of Fig. 1.
Fig. 11 is a block diagram of a detailed structural example of the operation control section of Fig. 1.
Fig. 12 is a block diagram of another two-frequency CW radar that is a measuring apparatus incorporating the invention, different from Fig. 1.
Fig. 13 is a block diagram of another example of all or part of the measuring apparatus incorporating the invention.

DESCRIPTION OF PREFERRED EMBODIMENTS

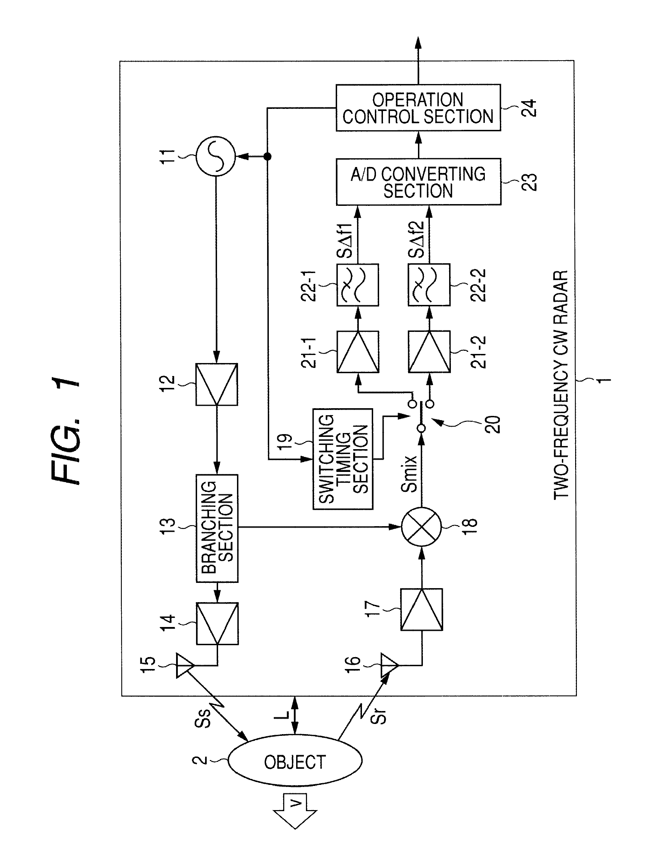

Fig. 1 is ablock diagram of a measuring apparatus according to an embodiment of the invention.

The measuring apparatus of Fig. 1 is a two-frequency CW radar 1.

The two-frequency CW radar 1 can perform measurement by two-frequency CW method as the name suggests.

The outline of the two-frequency CW measurement will be described hereinbelow.

The two-frequency CW radar 1 generates a signal in which two different waves (CWs) with a frequency f1 and a frequency f2 are switched by time division (hereinafter, referred to as a two-frequency CW) and outputs the two-frequency CW as a transmission signal Ss.

The transmission signal Ss is reflected by an object 2 and received as a reception signal Sr by the two-frequency CW radar 1.

Assume relative velocity v is present between the two-frequency CW radar 1 and the object 2, Doppler frequencies $\Delta f1$ and $\Delta f2$ are generated in the frequencies f1 and f2 of the transmission signal Ss, respectively, so that the frequency of the reception signal Sr becomes frequency $f1 + \Delta f1$ and frequency $f2 + \Delta f2$. In other words, the two-frequency CW having the two frequencies $f1 + \Delta f1$ and $f2 + \Delta f2$ becomes a signal equivalent to the reception signal Sr.

Therefore, the two-frequency CW radar 1 can find the relative velocity v of the object 2 to the two-frequency CW radar 1 by detecting the Doppler frequency $\Delta f1$ or $\Delta f2$ from the reception signal Sr and calculating Equation (1) or (2).

$$v ~=~ c ~*~ \Delta f1/(2*f1) \qquad\qquad (1)$$

$$v ~=~ c ~*~ \Delta f2/(2*f2) \qquad\qquad (2)$$

wherein c represents the velocity of light.

The two-frequency CW radar 1 can also find the distance L between the two-frequency CW radar 1 and the object 2 by detecting the phase $\phi1$ of the Doppler signal having the Doppler frequency $\Delta f1$ and the phase $\phi2$ of the Doppler signal having the Doppler frequency $\Delta f2$ from the reception signal Sr, and calculating Equation (3).

$$L ~=~ c ~*~ (\phi1 ~-~ \phi2)/4\pi ~*~ (f1 ~-~ f2) \qquad (3)$$

Ranging by such a series of operations is the two-frequency CW measurement.

The two-frequency CW radar 1 of Fig. 1 includes an oscillating section 11 to an operation control section 24 to execute the two-frequency CW measurement.

The oscillating section 11 oscillates a CW of the frequency f1 and a CW of a frequency f2 alternately switched under the control of the operation control section 24. That is, a two-frequency CW having the frequencies f1 and f2 is output from the oscillating section 11 into an amplifying section 12.

The amplifying section 12 applies various processes including amplification to the two-frequency CW and provides it to a branching section 13.

The branching section 13 sends the two-frequency CW from the amplifying section 12, that is, the two-frequency CW having the frequencies f1 and f2 to each of an amplifying section 14 and a mixing section 18.

The amplifying section 14 applies various processes including amplification to the two-frequency CW from the branching section 13, that is the two-frequency CW having frequencies f1 and f2 and outputs the resultant signal to an antenna 15. The signal output from the amplifying section 14 is output from the antenna 15 as a radio transmission signal Ss.

The two-frequency CW is modulated by a predetermined modulation scheme as necessary and output as the transmission signal Ss from the antenna 15. The modulating process is executed by the amplifying section 14, for example.

The transmission signal Ss is reflected by the object 2, and the reflection signal is received as the reception signal Sr by an antenna 16.

In the example of Fig. 1, the transmitting antenna 15 and the receiving antenna 16 are separated, while one antenna serving both as transmission and reception may be provided.

An amplifying section 17 applies various processes including amplification to the reception signal Sr received by the antenna 16, and outputs the resultant two-frequency CW to the mixing section 18. If the amplifying section 14 executes modification, the amplifying section 17 further executes demodulation corresponding to the modification to obtain the above-described two-frequency CW.

The two-frequency CW output from the amplifying section 17, that is, the two-frequency CW obtained from the reception signal Sr has the frequency $f1 + \Delta f1$ and the frequency $f2 + \Delta f2$, as described above. That is, the amplifying section 17 outputs the CW of frequency $f1 + \Delta f1$ and the CW of frequency $f2 + \Delta f2$ switched alternately in time division.

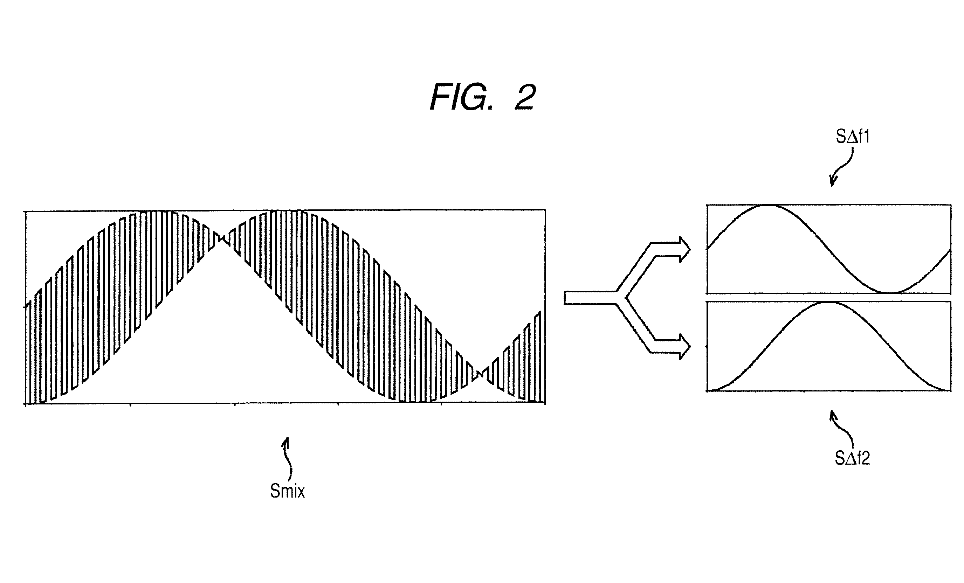

The mixing section 18 mixes the two-frequency CW (the two-frequency CW having the frequency $f1 + \Delta f1$ and the frequency $f2 + \Delta f2$) output from the amplifying section 17 and the two-frequency CW (the two-frequency CW having the frequencies f1 and f2) output from the branching section 13, and outputs a resultant mixed signal Smix, specifically, the mixed signal Smix having the waveform shown in Fig. 2 to a switching section 20.

The switching section 20 switches the output from one of amplifying sections 21-1 and 21-2 to the other according to the control of a switching timing section 19. That is, the switching timing section 19 monitors the timing to switch the oscillation frequencies f1 and f2 of the oscillating section 11 by the operation control section 24, and switches the output of the switching section 20 to the amplifying section 21-1 at the timing that the frequency is switched from f2 to f1, and switches the output of the switching section 20 to the amplifying section 21-2 at the timing that the frequency is switched from f1 to f2.

That is, of the mixed signal Smix, the signal output from the mixing section 18 while the oscillating section 11 is oscillating the CW of the frequency f1 is sent to the amplifying section 21-1 via the switching section 20, where it is subjected to various processes including amplification, from which high-frequency components (noise etc.) are removed by a low-pass filter 22-1, and is sent as a signal S△f1 to an A/D converting section 23. The signal S△f1 is a Doppler signal having the Doppler frequency △f1.

Of the mixed signal Smix, the signal output from the mixing section 18 while the oscillating section 11 is oscillating the CW of the frequency f2 is sent to the amplifying section 21-2 via the switching section 20, where it is subjected to various processes including amplification, from which high-frequency components (noise etc.) are removed by a low-pass filter 22-2, and is sent as a signal S△f2 to the A/D converting section 23. The signal S△f2 is a Doppler signal having the Doppler frequency △f2.

Specifically, as shown in Fig. 2, the mixed signal Smix output from the mixing section 18 is separated to the Doppler signal S△f1 having the Doppler frequency △f1 and the Doppler signal S△f2 having the Doppler frequency △f2 by the components from the switching timing section 19 to the low-pass filter 22-2, and are each sent to the A/D converting section 23.

The A/D converting section 23 applies A/D conversion (analog to digital conversion) to each of the Doppler signal S0f1 having the Doppler frequency △f1 and the Doppler signal S△f2 having the Doppler frequency △f2 , and provides the resultant digital Doppler signals S△f1 and S△f2 to the operation control section 24.

The operation control section 24 controls the whole of the two-frequency CW radar 1, for example, executes the control to switch the frequency of the CW oscillated by the oscillating section 11 from one of the frequencies f1 and f2 to the other.

The operation control section 24 detects the Doppler frequencies Of1 and Af2 and the phase difference φ1 - φ2 therebetween from the Doppler signals S△f1 and S△f2 subsequently sent in digital form from the A/D converting section 23. The operation control section 24 substitutes the detection results for the foregoing equations (1) to (3) to obtain the relative velocity v of the object 2 and the distance L between the two-frequency CW radar 1 and the object 2, and outputs them to the exterior.

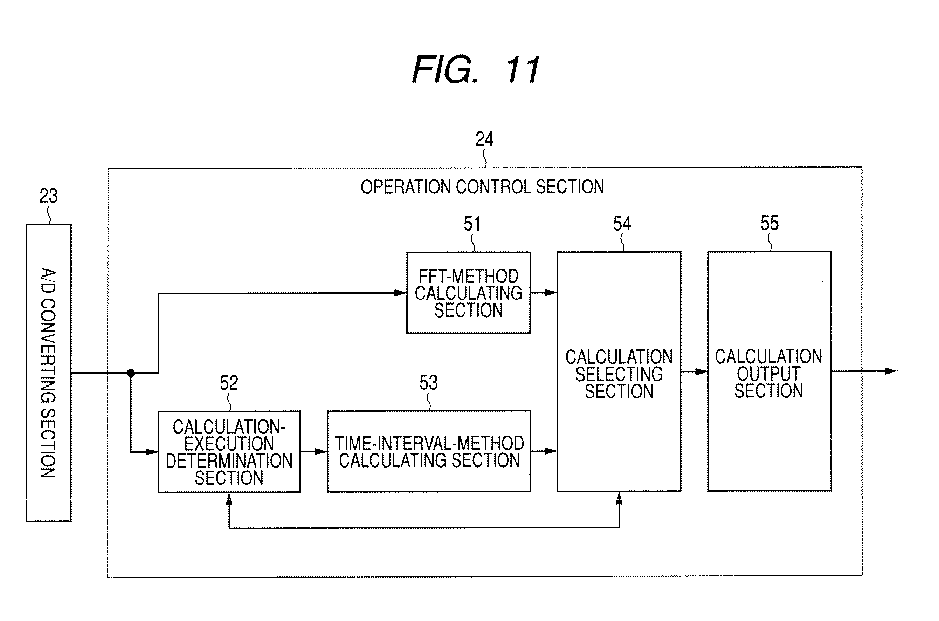

The details of the structure of the operation control section 24 will be descried later with reference to Fig. 11.

Thus, the operation control section 24 needs to detect the Doppler frequencies △f1 and △f2 and the phase difference φ1 - φ2 therebetween.

Widely used for detection is a method of detecting the Doppler frequencies △f1 and △f2 and the phase difference φ1 - φ2 corresponding thereto by applying frequency analysis or fast Fourier Transform (FFT) analysis (hereinafter, simply referred to as FFT) to the Doppler frequencies △f1 and △f2. This method is hereinafter referred to as an FFT method.

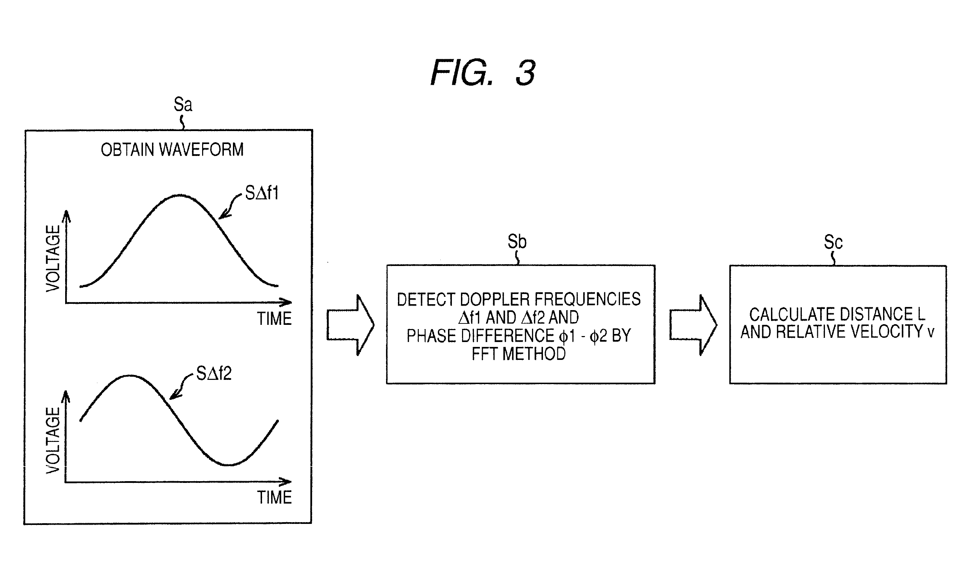

That is, with the FFT method, the operation control section 24 can obtain the relative velocity v of the object 2 or the distance L between the two-frequency CW radar 1 and the object 2 and output them by executing a series of process steps as shown in Fig. 3.

Specifically, in step Sa, the operation control section 24 obtains the waveforms of the Doppler signals S△f1 and S△f2 from the A/D converting section 23.

In step Sb, the operation control section 24 detects the Doppler frequencies △f1 and △f2 and the phase difference φ1 - φ2 corresponding thereto by the FFT method using the waveforms obtained in step Sa.

In step Sc, the operation control section 24 substitutes the detection results of step Sb for the foregoing equations (1) to (3) to calculate the distance L and the relative velocity v.

Here, a case where the two-frequency CW radar 1 is installed in an ACC system or a precrash system will be described. In this case, the distance measurement when another vehicle comes within close range is required to have fast response while maintaining high accuracy from the viewpoint of the characteristic, as described above.

However, the related-art two-frequency CW radars have the problem of low response speed when another vehicle (object) comes closer than a predetermined range. This problem hinders the two-frequency CW radar from sufficiently meeting the foregoing requirements.

However, the two-frequency CW radar 1 incorporating the invention has a structure to solve the problem. Accordingly, incorporating the two-frequency CW radar 1 in the ACC system or the precrash system allows the above-described requirements to be met.

The reason why the two-frequency CW radar 1 incorporating the invention can solve the above problem will be described hereinbelow.

In general, the dynamic range of the strength of the reception signal Sr is proportional to the fourth power of the dynamic range of the detection distance. For example, if the maximum detection distance Lmax of the object 2 is set at 15 m and the minimum detection distance Lmin is set at 1 m, 50 cm, and 10 cm, the dynamic range of the strength of the reception signal Sr increases to 50,625 times, 810,000 times, and 506,250, 000 times, respectively. Itmaythereforebedifficult to execute signal processing with high accuracy only by gain control using reception amplifiers (in the example of Fig. 1, the amplifying section 21-1 and 21-2, etc.) or the quantization resolution of an AD converter (in the example of Fig. 1, the A/D converting section 23) if considering that the reception signal Sr with this wide dynamic range is processed by an actual circuit such as the two-frequency CW radar 1.

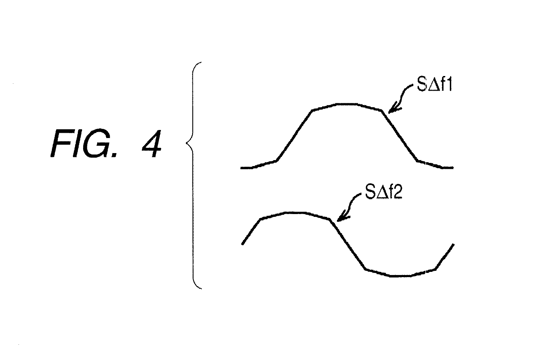

That is, the reception signal Sr from the object 2 in close range can be distorted or saturated. In that case, the Doppler signals S△f1 and S△f2 extracted from the reception signal Sr may also be distorted or saturated as shown in Fig. 4. Calculation of the distance L or the relative velocity v by FFT using such distorted or saturated Doppler signals S△f1 and S△f2 may pose the first problem that the calculation is not correct.

Suppose the two-frequency CW radar 1 is installed in the host vehicle to prevent a collision. It is obvious that a decrease in the distance L between the object 2 such as another vehicle and the host vehicle may increase the risk of a collision correspondingly. This leads to a demand to reduce the response time of the two-frequency CW radar 1 to detect a collision with higher accuracy as the object 2 comes within close range. However, the use of only the FFT method as ever poses the second problem of difficulty in meeting such a demand.

That is, the FFT method is thought to need at least a signal sampling time corresponding to ten cycles of the maximum frequency (here, Doppler frequencies $\Delta f1$ and $\Delta f2$) of the signal to be calculated, less than which may reduce the calculation accuracy. This obviously shows that the response speed of the FFT method is restricted by the sampling time in consideration of that the response speed is the sum of the sampling time and the time required to detect the Doppler frequencies $\triangle f1$ and $\Delta f2$ or the phase difference $\phi1 - \phi2$ (or calculation time) . The FFT method with such restriction may have the problem in increasing response speed while maintaining necessary distance accuracy when the object 2 is present in close range, that is, the second problem.

Thus, since the related-art two-frequency CW radars use the FFT system even if the object 2 is present in close range, they have the first and second problems.

Thus, the inventor has invented the following method to solve the first and second problems. That is, an embodiment of the ranging apparatus incorporating the following system is the two-frequency CW radar 1 shown in Fig. 1.

The inventor has invented a method in which when the two-frequency CW radar 1 has determined that the distance L of the object 2 exceeds a predetermined range during tracing the object 2 (during successive calculation of the distance L), the distance L and the relative velocity v are calculated by a FFT method, and when the two-frequency CW radar 1 has determined that the distance L of the object 2 has become shorter than the predetermined range, the distance L and the relative velocity v are calculated by a so-called time interval method. This method is hereinafter referred to as a distance switching method. The distance switching method does not necessarily need calculation of the relative velocity v as the name suggests.

The method for determining whether or not the distance L of the object 2 has become shorter than the predetermined range is not particularly limited.

For example, as described above, the strength (power) of the reception signal Sr has the characteristic of increasing as the distance L of the object 2 decreases. This makes it possible to adopt a method of determining that the distance L of the object 2 has become shorter than a predetermined range when the strength (power) of the reception signal Sr or signals based thereon (for example, the Doppler signals S△f1 andS△f2) is higher than a predetermined level. This method is hereinafter referred to as a reception-strength determining method.

The gain control of the amplifying sections 21-1 and 21-2 has also limitation. Therefore, if a reception signal Sr with a predetermined reception strength or more is received, its signal waveform will be saturated, as described with reference to Fig. 4 . This makes it possible to adopt amethodof determining that the distance L of the object 2 has become shorter than a predetermined range when the reception signal Sr or signals based thereon (for example, the Doppler signals S△f1 and S△f2) are saturated. This method can also be an embodiment of the reception-strength determining method.

The two-frequency CW radar 1 calculates the distance L successively. This makes it possible to adopt a method of determining that the distance L of the obj ect 2 has become shorter than a predetermined range when the distance L has become smaller than a threshold value. This method is hereinafter referred to as a calculation-distance determining method.

Although not shown in Fig. 1, another method can be adopted which determines that the distance L of the object 2 has become shorter than a predetermined range using the detection results of another measuring apparatus (another distance sensor or the like) different from the two-frequency CW radar 1 . This method is hereinafter referred to as a separate-sensor determining method.

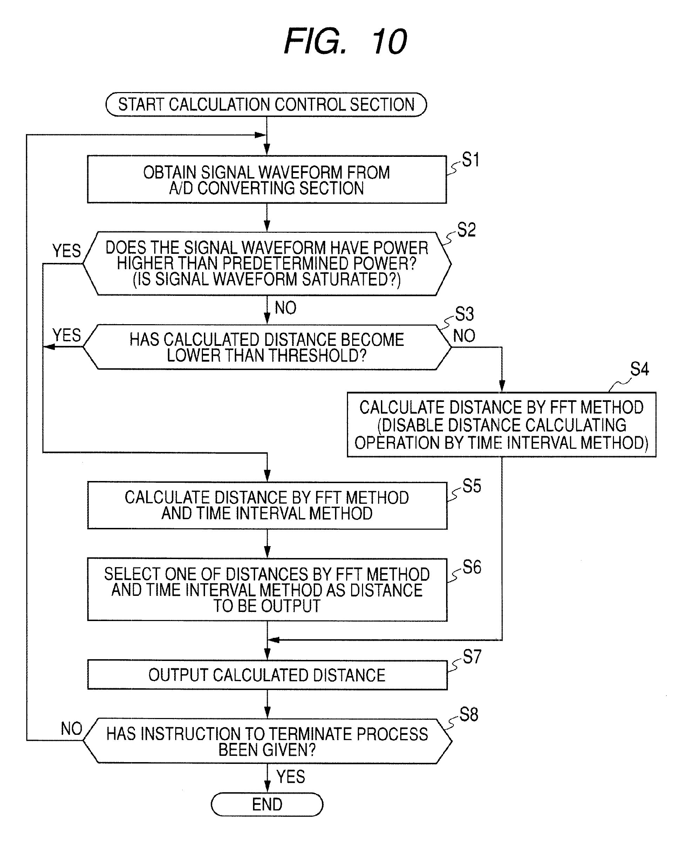

Furthermore, for example, the above-described methods may be combined. For example, an example of the process of the combination of the reception-strength determining method and the calculation-distance determining method will be described later with reference to Fig. 10.

Here, the time interval method will be described.

The time interval method is a method whereby the Doppler frequencies $\Delta f1$ and $\Delta f2$ and the phase difference $\phi1 - \phi2$ therebetween are detected by observation of the rising time and the falling time of the Doppler signals $S\Delta f1$ and $S\Delta f2$.

The rising time and the falling time do not indicate the time necessary for changes in signal voltage. That is, of the timing (time) at which the waveforms of the Doppler signals $S\Delta f1$ and $S\Delta f2$ cross a predetermined voltage value (for example, 0 volt), the timing at which the waveforms rise higher than the predetermined voltage value is referred to as the rising time, and the timing (time) at which the waveforms fall lower than the predetermined voltage level is referred to as the falling time.

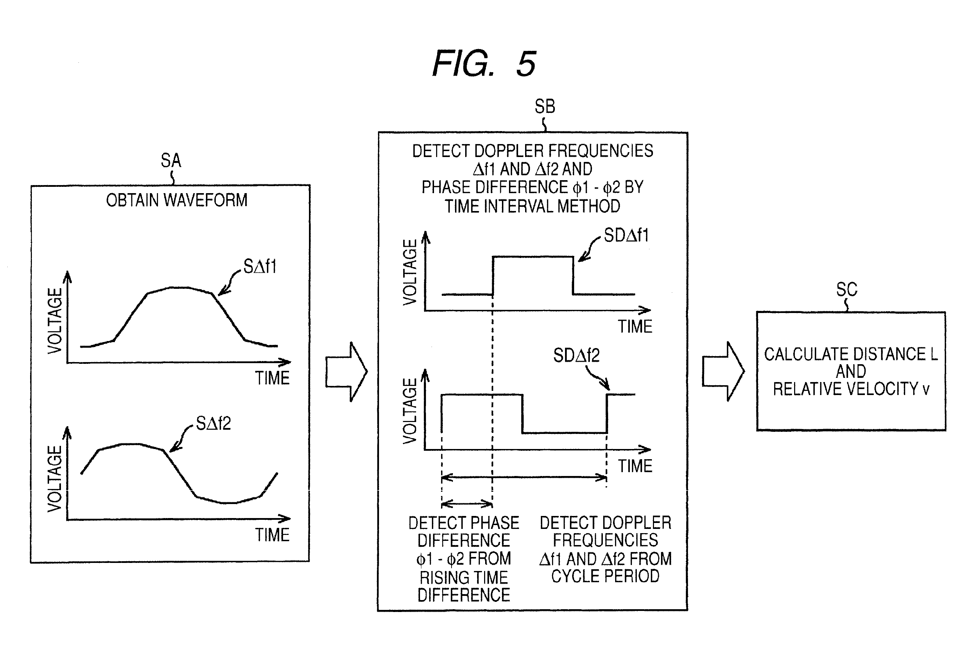

To observe the rising time and the falling time (position) accurately, it is preferable to use not the Doppler signals $S\Delta f1$ and $S\Delta f2$ themselves but signals that are further amplified, for example, pulse signals $SD\Delta f1$ and $SD\Delta f2$, as shown in step SB of Fig. 5.

In the example of Fig. 5, the phase difference $\phi1 - \phi2$ is obtained from the rising time difference between the pulse signals $SD\Delta f1$ and $SD\Delta f2$, and the Doppler frequencies $\Delta f1$ and $\Delta f2$ are detected from the rising cycle period of the pulse signals $SD\Delta f1$ and $SD\Delta f2$.

In the example of Fig. 5, the Doppler frequencies $\Delta f1$ and $\Delta f2$ are detected from the rising cycle period of the pulse signals $SD\Delta F$ and $SD\Delta f2$, respectively, for ease of explanation. Instead, they may be detected from the interval between the rising and the following falling of the pulse signals $SD\Delta f1$ and $SD\Delta f2$, or the falling and the following rising of the pulse signals $SD\Delta f1$ and $SD\Delta f2$, respectively.

In the example of Fig. 5, the pulse signals $SD\Delta f1$ and $SD\Delta f2$ are used as an example of the amplified Doppler signals $S\Delta f1$ and $S\Delta f2$, for ease of explanation. However, the amplification is made to improve the rising and falling time measuring accuracy, and it is not therefore absolutely necessary to use pulse signals in the time interval method.

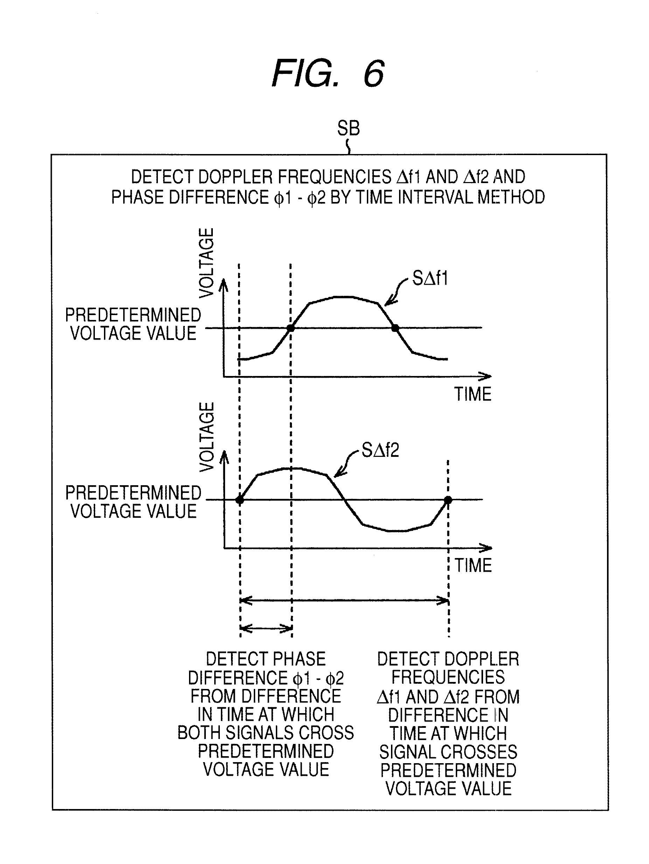

For example, as shown in Fig. 6, the Doppler signals $S\Delta f1$ and $S\Delta f2$ themselves or their amplified signals may be used.

In this case, as shown in Fig. 6, the phase difference $\phi1 - \phi2$ is detected from the difference in time at which the Doppler signals $S\Delta f1$ and $S\Delta f2$ (including amplified signals) cross a predetermined voltage value, that is, rising time difference. The Doppler frequencies $\Delta f1$ and $\Delta f2$ are detected from the time interval at which the Doppler signals $S\Delta f1$ and $S\Delta f2$ (including amplified signals) cross a predetermined voltage value, that is, the respective rising cycle periods.

Thus, the measurement by the time interval method is not affected by the saturation of the reception signal Sr due to the presence of the object 2 in close range, because only the time at which the Doppler signals $S\Delta f1$ and $S\Delta f2$ (including amplified signals) cross a predetermined voltage value has to be measured accurately. This can therefore facilitate or eliminate the control to adjust the amplification factor of reception amplifiers (in the example of Fig. 1, the amplifying section 21-1, 21-2, etc.) to prevent the reception signal Sr from being saturated.

In comparison of the methods of Figs. 3 and 5, the principal difference is the process of detecting the phase difference $\phi1 - \phi2$ between step Sb of Fig. 3 and step SB of Fig. 5. However, the step Sb of Fig. 3 needs data collecting time for FFT, that is sampling time, for this detection, and thus needs processing time correspondingly. In contrast, step SB of Fig. 5 does not need data collection time, that is sampling time, because only the time at which the Doppler signals $S\Delta f1$ and $S\Delta f2$ (including amplified signals) cross a predetermined voltage value has to be measured accurately, so that the process is completed in a shorter time than in step Sb of Fig. 3. This shows that the overall response speed for distance measurement is higher in the time interval method than in the FFT method.

Accordingly, when an object is present in close range, the above-described first and second problems can be solved by effective use of the time interval method, that is, by applying the distance switching method of the invention.

The distance switching method will be described in more detail from the viewpoint of the process of the operation control section 24 of Fig. 1.

If it is determined that the distance L of the object 2 exceeds a predetermined range, the operation control section 24 calculates the distance L and the relative velocity v by the FFT method. That is, the process from steps Sa to Sc in Fig. 3 is executed.

In contrast, if it is determined that the distance L of the object 2 has become shorter than a predetermined range, the operation control section 24 calculates the distance L and the relative velocity v by the time interval method.

More specifically, in step SA of Fig. 5, the operation control section 24 obtains the waveforms of the Doppler signals $S\Delta f1$ and $S\Delta f2$ from the A/D converting section 23. At that time, the operation control section 24 may generate amplified signals of the Doppler signals $SOf1$ and $S\Delta f2$ (including the pulse signals $SD\Delta f1$ and $SD\Delta f2$ in Fig. 5). As an alternative, amplified signals of the Doppler signals $S\Delta f1$ and $S\Delta f2$ (including the pulse signals $SD\Delta f1$ and $SD\Delta f2$ in Fig. 5) may be generated in advance at the previous stage of the operation control section 24 and the A/D converting section 23.

In step SB of Figs. 5 and 6, the operation control section 24 detects the Doppler frequencies $Of1$ and $Af2$ and the phase difference $\phi1 - \phi2$ therebetween by the time interval method using the waveforms obtained in step SA.

In step SC of Fig. 5, the operation control section 24 substitutes the detection results of step SB for the foregoing equations (1) to (3) to calculate the distance L and the relative velocity v.

As will be discussed later with reference to Fig. 10, if it is determined that the distance L has become shorter than a predetermined range, the operation control section 24 may calculate the distance L and the relative velocity v by using both the time interval method and the FFT method (see step S5 of Fig. 10). In this case, the operation control section 24 outputs one of the calculations by the methods or the combination of the calculations by the methods to the outside (see steps S6 and S7 of Fig. 10).

The application of the distance switching method of the invention is not limited to the two-frequency CW radar 1. Another application will be described later. Together with the description of another application, the definition of a more general time interval method will be described.

When it is determined that the distance L of the object 2 has become shorter than a predetermined range, the measurement is switched to the time internal method, so that the influence of the distortion of the reception signal Sr can be prevented and the response speed of the two-frequency CW radar 1 can be improved.

However, the time interval method is used only for signals in which a single frequency is predominant. Therefore, this method, when applied to the two-frequency CW radar 1, cannot be in principle used when two or more objects 2 of different relative velocities v are present.

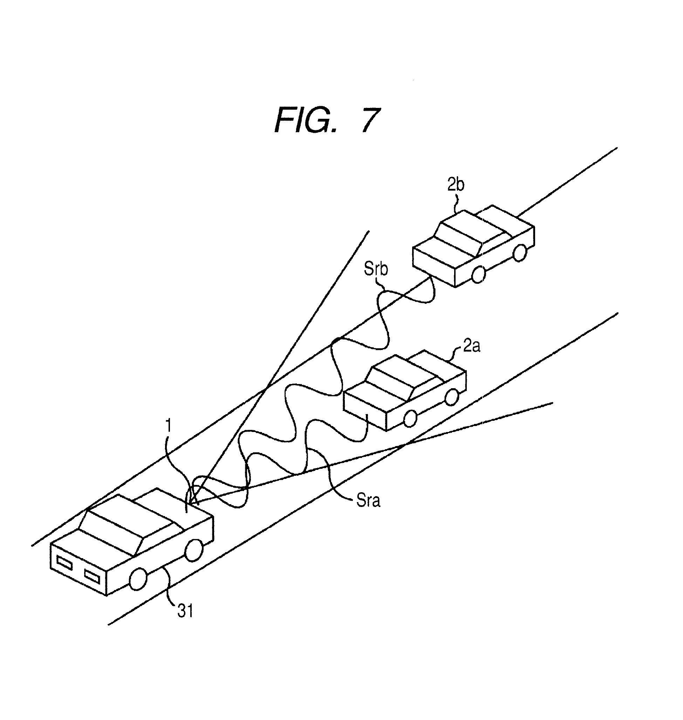

For example, as shown in Fig. 7, suppose that the two-frequency CW radar 1 is mounted at the front of a host vehicle 31, in front of which objects 2a and 2b are present as other vehicles. In this case, the reception signal Sr is a composite signal of a signal Sra reflected by the object 2a and a signal Srb reflected by the object 2b.

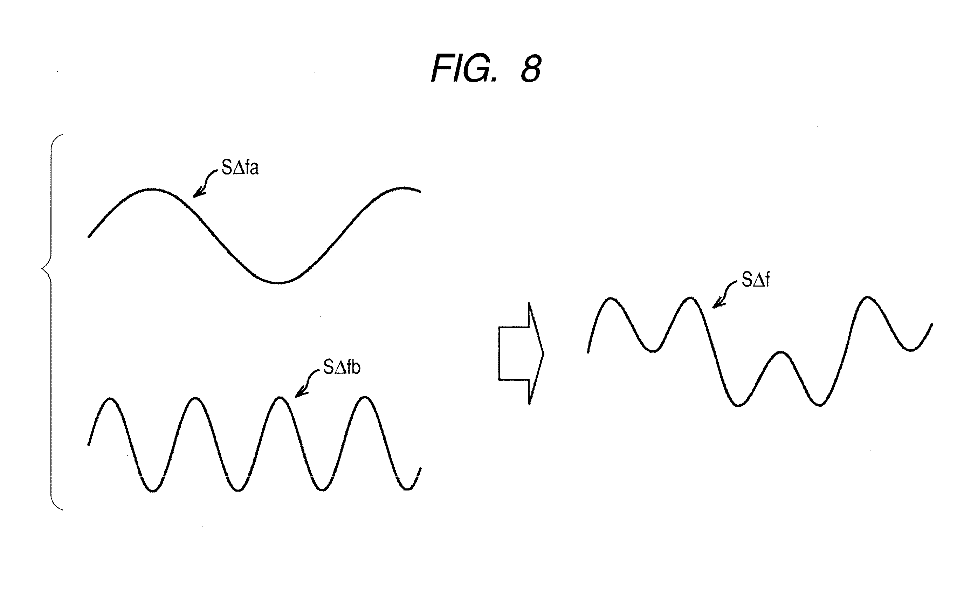

Here, suppose that the relative velocity va of the object 2a is lower than the relative velocity vb of the object 2b. Then, as shown on the left in Fig. 8, the Doppler frequency Δfa of the Doppler signal SΔfa of the signal Sra reflected by the object 2a (although two Doppler frequencies Δfa1 and Δfa2 are actually present, they are expressed as one frequency for ease of explanation) are lower than the Doppler frequency Δfb of the Doppler signal SΔfb of the signal Srb reflected by the object 2b (although two Doppler frequencies Δfb1 and Δfb2 are actually present, they are expressed as one frequency for ease of explanation).

Accordingly, in the case shown in Figs. 7 and 8, the reception signal Sr which is a composite signal of the signal Sra reflected by the object 2a and the signal Srb reflected by the object 2b is received by the two-frequency CW radar 1, and the Doppler signal SΔf (although two Doppler frequencies Δf1 and Δf2 are actually present, they are expressed as one frequency for ease of explanation) extracted from the reception signal Sr comes to the waveform as shown on the right of Fig. 8. That is, the Doppler signals SΔfa and SΔfb shown on the left of Fig. 8 are combined into the Doppler signal SΔf shown on the right of Fig. 8.

If the Doppler signal SΔf with this waveform is obtained in step SA of Fig. 5, the detection results of step SB of Fig. 5 or 6, that is, the Doppler frequencies Δf1 and Δf2 and the phase difference φ1 - φ2 by the time interval method are not any of the objects 2a and 2b with no relation thereto. Thus, the relative velocity v and the distance L calculated from such Doppler frequencies Δf1 and Δf2 and phase difference φ1 - φ2 are not any of the objects 2a and 2b.

Thus, the time interval method, when applied to the two-frequency CW radar 1, cannot be used in principle when two or more obj ects 2 of different relative velocities v are present .

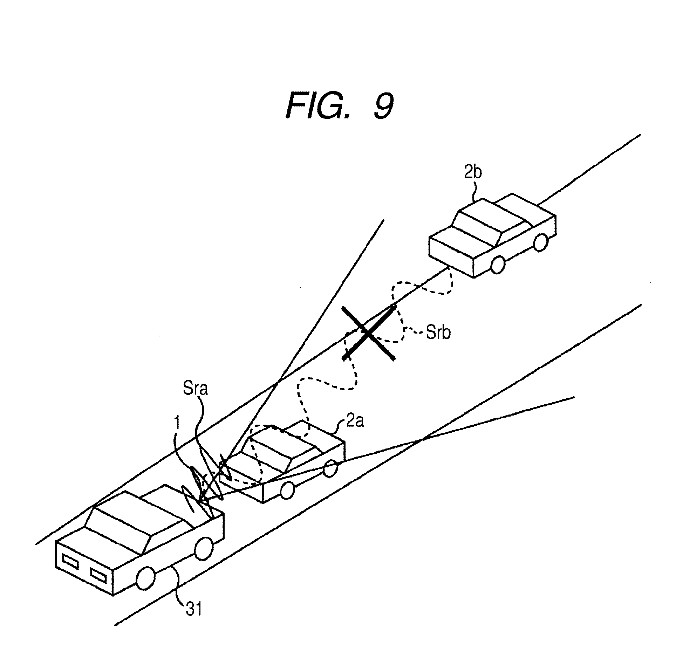

However, in the distance switching method of the invention, the time interval method is used when the distance L of the object 2 has become shorter than a predetermined range. In this case, for example, when the object 2a has come closer than a predetermined range, as shown in Fig. 9, almost all the transmission signal Ss are reflected by the object 2a, and hardly arrive at the object 2b in the distance. Accordingly, the reception signals Sr in this case can be regarded as the signal Sra reflected by the object 2a.

Since the object 2b is present far from the object 2a, the reception strength of the signal Srb reflected by the obj ect 2b, if included in the reception signals, is much lower than the reception strength of the signal Sra because of the distance of the dynamic range, and thus the reception signal Sr has a predominance of signals Sra.

Thus, when the distance L of one object 2 (in the example of Fig. 9, the object 2a) has become shorter than a predetermined range, the reception signal Sr can be regarded as only the signal reflected by one approaching object 2 (in the example of Fig. 9, the object 2a), that is, a signal having a predominance of a single frequency. Accordingly, if the distance L of one object 2 (in the example of Fig. 9, the object 2a) has become shorter than a predetermined range, the time interval method can be used.

In order to further improve the accuracy, it is also possible that a determination is made whether the reception signal Sr has only a single frequency, wherein only when it is determined that the reception signal Sr has only a single frequency, the time interval method is used, and at other times, the FFT method is used. In this case, the determination on a single frequency needs calculations by the FFT method. Since the FFT method has low response speed, as described above, the number of determinations and timing must be considered.

An operation example of the two-frequency CW radar 1 of Fig. 1 will now be described.

Descriptions of the operations of the oscillating section 11 to the A/D converting section 23 will be omitted here because they are basically the same as those of the related-art one and can easily be understood by referencing the descriptions of the structures of the oscillating section 11 to the A/D converting section 23.

Referring to Fig. 10, an operation (process) example of the operation control section 24 of the two-frequency CW radar 1 will be described.

The flowchart of Fig. 10 describes, of the processes of the operation control section 24, only the calculation of the distance L. Here, the operation control section 24 can calculate the relative velocity v in addition to or in place of the distance L, as described above.

In step S1, the operation control section 24 obtains the signal waveform from the A/D converting section 23.

In step S2, the operation control section 24 determines whether the signal waveform obtained in step S1 has power higher than predetermined power.

As described above, the signal waveform obtained by the process of step S1 is saturated in the case where the gain control of the amplifying sections 21-1 and 21-2 is not executed or the gain control itself comes to limit and thus the distance L of the object 2 has become shorter than a predetermined range (see Fig. 4). Therefore, for the determination process of step S2, the operation control section 24 may determine whether the signal waveform has been saturated.

If the signal waveform obtained in step S1 has no power higher than predetermined power (is not saturated), a negative determination is made in step S2 and the process moves to step S3.

In step S3, the operation control section 24 determines whether the calculated distance L has become lower than a threshold value. The calculated distance L here is at least one of the history of the distances L that the operation control section 24 calculated before (the outputs of step S7, to be described later, or the history of the output), for example, the last calculation.

If the calculated distance L exceeds a threshold value, a negative determination is made in step S3, and the process moves to step S4.

In step S4, the operation control section 24 calculates the distance L by the FFT method. In other words, the operation control section 24 disables the distance calculating operation by the time interval method. That is, as the process of step S4, the processes from steps Sa to Sc of Fig. 3 described above are executed. The process of step Sa may be regarded as the process of step S1.

In step S7, the operation control section 24 outputs the result of the process of step S4, that is, the calculated distance L (and the relative velocity v in this case). In step S8, the operation control section 24 determines whether an instruction to terminate the process has been given. If no process end instruction has been given, a negative determination is made in step S8, and the process is returned to step S1 and the subsequent processes are repeated. In contrast, if an instruction to terminate the process is given, a positive determination is made instep S8, and the process of the operation control section 24 is completed.

That is, the determination processes in steps S2 and S3 are examples of determination whether the distance L of the object 2 has become shorter than a predetermined range. Specifically, the determination process of step S2 is for the above-described reception-strength determination method, and the determination process of step S3 is for the calculation-distance determination method.

Accordingly, since the negative determinations in steps S2 and S3 can spell the determination that the distance L of the object 2 exceeds a predetermined range, calculation of the distance L and the relative velocity v using the FFT method is executed in step S4.

In contrast, positive determinations in step S2 or S3 indicate that the distance L of the object 2 has become shorter than a predetermined range. Thus, calculation of the distance L and the relative velocity v using the time interval method is executed.

In step S5, the operation control section 24 calculates the distance by the FFT method and the time interval method. That is, in step S5, the processes of steps Sa to Sc of Fig. 3 and the steps SA to SC in Figs. 5 and 6 are executed. Here, the processes in steps Sa and SA may be regarded as the process of step S1.

In step S6, the operation control section 24 selects one of the distances calculated by the FFT method and the time interval method as the calculated distance L to be output.

For example, as described above, if it is determined that the waveform obtained in step S1 includes only one frequency, the operation control section 24 may select the calculation by the time interval method as the calculated distance L to be output, and if it is determined that the waveform includes two or more frequencies, the operation control section 24 may select the calculation by the FFT method as the calculated distance L to be output.

To balance response speed and accuracy, for example, it is also possible to use the two-frequency CW radar 1 for outputting calculations by the time interval method at predetermined intervals and outputting calculations by the FFT method for correction every time they are calculated. For this purpose, the operation control section 24 may execute the process of step S6.

In the example of Fig. 10, the FFT method is used in conjunction with the time interval method, in both of which the distance L is calculated individually. However, the calculation by the FFT method is not absolutely necessary. That is, in step S5, the calculation of the distance L only by the time interval method may be made. In this case, the process of step S6 is not necessary.

In step S7, the operation control section 24 outputs the selection result of step S6, that is, the distance L, one of the calculations by the time interval method and the FFT method. In step S8, the operation control section 24 determines whether an instruction to terminate the process is given. If no process end instruction has been given, a negative determination is made in step S8, and the process is returned to step S1, and the subsequent processes are repeated. In contrast, a process end instruction is made, a positive determination is made in step S8, and the process of the operation control section 24 is completed.

Fig. 11 shows a detailed example of the functional structure of the operation control section 24 capable of the process of the flowchart of Fig. 10. That is, the functional blocks of Fig. 11 have the function for achieving the process of the flowchart of Fig. 10, out of the functions of the operation control section 24. In other words, Fig. 11 does not show the other functions of the operation control section 24, for example, the functional blocks for controlling the switching of the frequencies of the CW oscillated by the oscillating section 11 between f1 and f2.

The functional blocks of Fig. 11 may be constituted by single hardware, single software, or a combination thereof. Multiple functional blocks may be united to one. Alternatively, one functional block may be divided to small functional blocks. In other words, the functional blocks in Fig. 11 may not necessarily be disposed in the operation control section 24 and may be disposed outside the operation control section 24, provided they are in the two-frequency CW radar 1.

In the example of Fig. 11, the operation control section 24 includes an FFT-method calculating section 51 to a calculation output section 55.

The FFT-method calculating section 51 calculates the distance L and the relative velocity v by the FFT method using the signal waveform sent from the A/D converting section 23, and provides the calculations to a calculation selecting section 54. That is, the FFT-method calculating section 51 operates during the processes in steps S1, S4, and S5 of Fig. 10.

A calculation-execution determination section 52 determines whether to execute calculation by the time interval method according to the signal waveform sent from the A/D converting section 23 and the information (the past output of the distance L and so on), and sends the determination to a time-interval-method calculating section 53 and the calculation selecting section 54. In other words, the calculation-execution determination section 52 determines whether the distance L of the object 2 has become smaller than a predetermined range. That is, the calculation-execution determination section 52 operates during the processes of steps S1 to S3 of Fig. 10.

If permission of calculation is given from the calculation-execution determination section 52, the time-interval-method calculating section 53 calculates the distance L and the relative velocity v by the time interval method using the signal waveform sent from the A/D converting section 23 via the calculation-execution determination section 52, and outputs the calculations to the calculation selecting section 54. That is, the time-interval-method calculating section 53 operates during the processes of steps S1 and S5 of Fig. 10.

In contrast, if a notification to disable the calculation is given from the calculation-execution determination section 52, the time-interval-method calculating section 53 stops its operation. That is, in this case, the calculation of the distance L and the relative velocity v by the time interval method is not performed. In other words, the time-interval-method calculating section 53 stops its operation during the process of step S4 in Fig. 10.

The calculation selecting section 54 selects one of the calculation by the FFT-method calculating section 51 (the distance L and the relative velocity v) and the calculation by the time-interval-method calculating section 53 (the distance L and the relative velocity v), and sends it to the calculation output section 55. That is, the calculation selecting section 54 operates during the process of step S6 in Fig. 10.

While the operation of the time-interval-method calculating section 53 stops, that is, when no calculation by the time-interval-method calculating section 53 is sent, the calculation selecting section 54 sends the calculation by the FFT-method calculating section 51 to the calculation output section 55 without determination on selection.

The calculation selecting section 54 may send a combination of the calculation by the FFT-method calculating section 51 (the distance L and the relative velocity v) and the calculation by the time-interval-method calculating section 53 (the distance L and the relative velocity v) to the calculation output section 55.

The calculation output section 55 outputs the calculation selected by the calculation selecting section 54, out from the calculation by the FFT-method calculating section 51 (the distance L and the relative velocity v) and the calculation by the time-interval-method calculating section 53 (the distance L and the relative velocity v). That is, the calculation output section 55 operates during the process of step S7 in Fig. 10.

The two-frequency CW radar 1 has been described as an example of the measuring apparatus incorporating the distance switching method of the invention. The distance switching method of this invention can be applied not only to the two-frequency CW radar 1 in Fig. 1 but also various apparatuses and systems. The system here indicates the whole apparatus composed of multiple processors and processing sections.

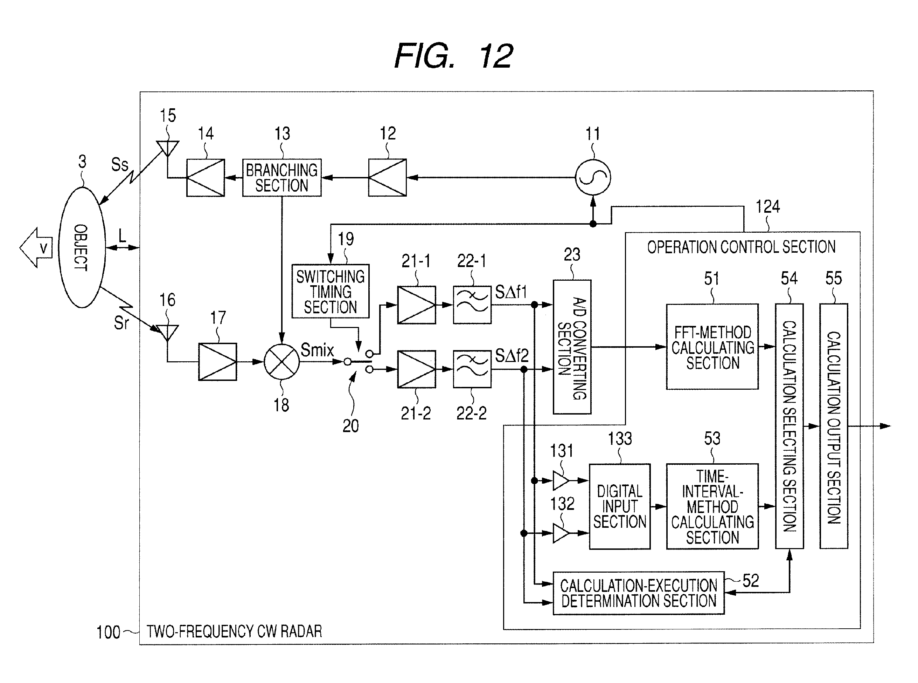

For example, Fig. 12 shows an example of a measuring apparatus incorporating the distance switching method of the invention, showing a structural example of a measuring apparatus with a structure different from the two-frequency CW radar 1 of Fig. 1. The measuring apparatus of Fig. 12 is configured as a two-frequency CW radar 100.

The components of the two-frequency CW radar 100 in Fig. 12 corresponding to those of the two-frequency CW radar 1 in Fig. 1 are denoted by the corresponding numerals and their description will be omitted as appropriated.

Of the two-frequencyCW radar 100 in Fig. 12, the structures of the oscillating section 11 to the A/D converting section 23 are the same as those of the two-frequency CW radar 1 in Fig. 1.

An operation control section 124 of the two-frequency CW radar 100 in Fig. 12 has basically the same function as the operation control section 24 in Fig. 1. That is, the operation control section 124 controls the entire two-frequency CW radar 100, executes control to switch the frequency of the CW oscillated by the oscillating section 11 between f1 and f2.

However, the example of Fig. 12 shows only functional blocks necessary for achieving the process of the flowchart in Fig. 10 for ease of comparison with the example of Fig. 11. That is, the functional blocks in Fig. 12 have the functions for achieving the process of the flowchart of Fig. 10, out of the functions of the operation control section 124.

As in Fig. 11, the functional blocks of Fig. 12 may also be constituted by single hardware, single software, or a combination thereof. Multiple functional blocks may be united to one. Alternatively, one functional block may be divided to small functional blocks. In other words, the functional blocks in Fig. 12 may not necessarily be disposed in the operation control section 124 and may be disposed outside the operation control section 124, provided they are in the two-frequency CW radar 100. For example, if the operation control section 124 is constituted by a microcomputer or the like, amplifying sections 131 and 132, discussed later, maybe provided separately from the microcomputer or the like, that is, outside the operation control section 124.

Of the components of the operation control section 124, the FFT-method calculating section 51 to the calculation output section 55 are principally the same as the components, shown in Fig. 11, of the operation control section 24 of the two-frequency CW radar 1 shown in Fig. 1.

However, the waveform used in the time-interval-method calculating section 53 of Fig. 11 is a digital signal waveform sent from the A/D converting section 23.

In contrast, the time-interval-method calculating section 53 of the example of Fig. 12 detects the Doppler frequencies $\triangle$f1 and $\triangle$f2 and the phase difference $\phi$1 - $\phi$2 therebetween not using the digital signal waveform from the A/D converting section 23 but using the rising time and the falling time of the pulsed amplified signals of the analog Doppler signals S$\Delta$f1 and S$\Delta$f2 sent from the amplifying sections 21-1 and 21-2.

For this purpose, the operation control section 124 in Fig. 12 has amplifying sections 131 and 132, or analog circuits, and a digital input section 133.

The amplifying sections 131 and 132 amplify the analog Doppler signals SOf1 and SAf2 from the amplifying sections 21-1 and 21-2 at a high amplification factor to saturate them to thereby generate pulse signals (for example, the pulse signals SD$\Delta$f1 and SD$\Delta$f2 of Fig. 5), respectively, and input them to thetime-interval-method calculating section 53 via the digital input section 133.

For correspondence with the example of Fig. 1, we described that the information input from the digital input section 133 to the time-interval-method calculating section 53 is pulse signals (for example, the pulse signals SD$\Delta$f1 and SD$\Delta$f2 in Fig. 5). Inthiscase,thetime-interval-method calculatingsection 53 measures rising time and falling time from the pulse signals. As an alternative, the digital input section 133 may measure rising time and falling time from the pulse signals and provide the measurements to the time-interval-method calculating section 53.

The Doppler signals S$\Delta$f1 and S$\Delta$f2 are amplified into pulse signals to clarify the rising time and the falling time, that is, to clarify the time at which the signals cross the predetermined voltage value in Fig. 6, 0 volt, for example. Accordingly, the structure is not limited to those of Figs. 1 and 12 provided that this object can be achieved; for example, the signals may be pulsed using a comparator or the like in place of the amplifying sections 131 and 132.

The distance switching method of the invention can be applied not only to measuring apparatuses of the two-frequency CW method but also to measuring apparatuses of other methods, such as a CW method and an FMCW method.

More generally speaking, for example, the distance switching method of this invention can be applied to a distance measuring apparatus that measures at least one of the relative velocity and the distance to an object using a mixed signal of a transmission signal with continuous waves of a predetermined frequency and a reflected wave from the object.

For example, of those measuring apparatuses, the distance switching method of this invention can be applied also to a measuring apparatus that measures the distance to an object using the phase difference between a first Doppler signal of a transmission signal having a first frequency reflected by an object and a second Doppler signal of a transmission signal having a second frequency reflected by an object.

This measuring apparatus can use at least the time interval method and another method to detect a phase difference necessary for the distance measurement. Here, it goes without saying that "another method" includes the above-described FFT method but is not limited to the FFT method.

In this case, the distance switching method is the following method. That is, a general distance switching method is as follows; if the foregoing measuring apparatus determines that an object is present outside a predetermined range (the object is present in a position exceeding a predetermined range) while tracing the object (while calculating the distance successively), it detects the phase difference by "another method" and calculates the distance using the phase difference; and if the measuring apparatus determines that the object is within a predetermined range (the obj ect is present in a position closer than a predetermined range), it detects the phase difference by the time interval method and calculates the distance using the phase difference.

The time interval method suitable for the general distance switching method is as follows: the phase difference between the first Doppler signal and the second Doppler signal is detected from the difference in time at which a first signal based on a first Doppler signal and a second signal based on a second Doppler signal cross a predetermined voltage value, that is, the above-described rising time difference, and the respective Doppler frequencies of the first Doppler signal and the second Doppler signal are detected from the time interval between the times at which the first and second signals cross the predetermined voltage value, that is, the above-described respective rising cycle periods.

The measuring apparatus may detect at least one of the Doppler frequency of the first Doppler signal and the Doppler frequency of the second Doppler signal by "another method" or the time interval method, and detect the relative velocity of the object using the detected Doppler frequency.

The application of the distance switching method of the invention allows calculation of the distance to an object that has come closer than a predetermined range using at least the time interval method, as described above. This allows accurate distance calculation even if the reception signal has distortion, and the response speed for the distance calculation to be increased. Thus, high response speed can be achieved while maintaining necessary ranging accuracy even in close range.

The high response speed can increase the number of averaging times, thus leading to an improve in the accuracy of distance calculation.

Moreover, this eliminates the need for gain control of amplifiers (in the example of Fig. 1, the amplifying sections 21-1 and 21-2) caused by the fact that an object comes within close range.

The distance switching method uses the time interval method only when one object is present within close range (therefore, only when the reception signal can be regarded as a signal reflected by one object), in consideration of a case in which multiple objects are present.

However, for example, provided that a reflected signal only from one object can be received as a reception signal by replacing the transmission antenna with an antenna having narrow directivity, the measuring apparatus can be increased in response speed by the parallel processing of the time interval method and another method (including the FFT method).

The above-described series of processes (or part thereof) can be achieved either by hardware or software.

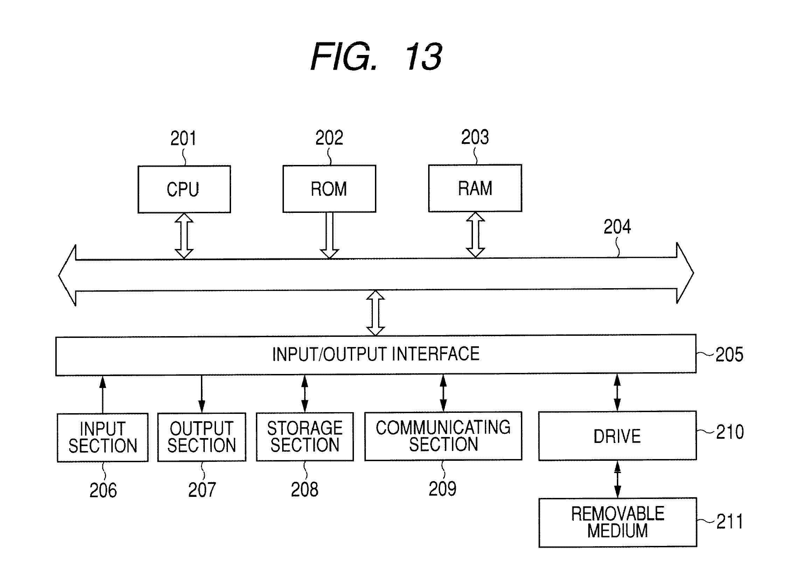

In this case, an apparatus for executing the series of processes (a system of the above-described definition) or part thereof may be configured by the computer as shown in Fig. 13.

Referring to Fig. 13, a central processing unit (CPU) 201 executes various processes according to a program recorded on a read-only memory (ROM) 202 or a program loaded on a random access memory (RAM) 203 from a storage section 208. The RAM 203 also stores data necessary for the CPU 201 to execute various processings.

The CPU 201, the ROM 202, and the RAM 203 are connected together via a bus 204. The bus 204 connects also to an input/output interface 205.

The input/output interface 205 connects to an input section 206 including a keyboard and a mouse, an output section 207 including a display, the storage section 208 such as a hard disk, and a communicating section 209 including a modem and aterminaladapter. The communicating section 209 communicates with other units via a network including the Internet. The communicating section 209 transmits the transmission signal Ss and receives the reception signal Sr for measuring the distance to the object 2 shown in Fig. 1 and so on, as necessary.

The input/output interface 205 connects also to a drive 210, as necessary, on which a removable medium 211 such as a magnetic disk, an optical disk, a magnetooptical disk, or semiconductor memory is loaded, as appropriate, so that a computer program read therefrom is installed into the storage section 208 as necessary.

To execute the series of processes with software, a program of the software is installed, via a network or from a recording medium, to a computer combined to dedicated hardware or a general-purpose personal computer capable of various functions according to various programs installed therein.

As shown in Fig. 13, examples of the recording medium having such a program include not only a magnetic disk (including a floppy disk), an optical disk (including a compact disc read-only memory (CD-ROM) and a digital versatile disk (DVD)), a magnetooptical disk (including a mini disk (MD)), and the removable media (package media) 211 such as a semiconductor memory, which are provided separately from the unit main body and distributed to the user to provide the program, but also the ROM 202 storing the program and a hard disk in the storage section 208 which are built in the unit main body in advance.

In this specification, the step of writing the program stored in the recording media includes not only processes executed in time sequence but also processes executed in parallel or individually.

**Claims**

1. A measuring apparatus (1, 100) that measures at least one of the relative velocity (v) and the distance (L) to an object (2) using a mixed signal (Smix) generated by mixing a transmission signal (Ss) of a continuous predetermined frequency and a wave reflected from the object (2), the measuring apparatus comprising (1, 100):

   a determining section that determines whether or not the object (2) is present within a predetermined range;
   a first operating section that calculates at least one of the relative velocity (v) and the distance (L) by a time interval method; and
   a second operating section that calculates at least one of the relative velocity (v) and the distance (L) by a second method different from the time interval method.

2. The measuring apparatus (1, 100) according to Claim 1, wherein
   the mixed signal (Smix) is a Doppler signal; and
   if it is determined by the determining section that the object (2) is present within the predetermined range, the first operating section detects the frequency of the Doppler signal and calculates the relative velocity v() to the object (2) using the frequency.

3. The measuring apparatus (1, 100) according to Claim 1, wherein
   the transmission signal (Ss) includes a first transmission signal having a first frequency and a second transmission signal having a second frequency;
   the mixed signal (Smix) includes a first Doppler signal generated from the first transmission signal and a second Doppler signal generated from the second transmission signal; and
   if it is determined by the determining section that the object (2) is within the predetermined range, the first operating section detects the phase difference between the first Doppler signal and the second Doppler signal and calculates the distance (L) to the object (2) using the phase difference.

4. The measuring apparatus (1, 100) according to Claim 3, wherein
   if the strength of the first Doppler signal or the second Doppler signal becomes higher than a predetermined strength, the determining section determines that the object (2) is present within the predetermined range.

5. The measuring apparatus (1, 100) according to Claim 4, wherein
   if the waveform of the first Doppler signal or the second Doppler signal is saturated, the determining section determines that the object (2) is present within the predetermined range.

6. The measuring apparatus (1, 100) according to any one of Claims 1 to 3, wherein
   if the distance to the object (2) calculated by the second operating section is shorter than a predetermined range, the determining section determines that the object (2) is present within the predetermined range.

7. The measuring apparatus (1, 100) according to Claim 3, wherein the second method is a fast Fourier transform (FFT) method whereby the phase difference is detected by applying FFT analysis to the first Doppler signal and the second Doppler signal.

8. The measuring apparatus (1, 100) according to Claim 3, wherein
   if the determining section determines that the object (2) is present within the predetermined range,
   the second operating section further calculates the distance (L) to the object (2); and
   the measuring apparatus further includes a third operating section that outputs one of the calculation by the first operating section and the calculation by the second operating section as the distance (L) to the object (2).

9. The measuring apparatus (1, 100) according to Claim 3, wherein
   the first operating section or the second operating section detects at least one of the Doppler frequency of the first Doppler signal and the Doppler frequency of the second Doppler signal and calculates the relative velocity (v) of the object (2) using the detected Doppler frequency.

10. A measuring method of a measuring apparatus (1, 100) that measures at least one of the relative velocity (v) and the distance (L) to an object (2) using a mixed signal (Smix) generated by mixing a transmission signal (Ss) of a continuous predetermined frequency and a wave reflected from the object (2), the measuring method comprising:

a determining step of determining whether or not the object (2) is present within a predetermined range;
a first operating step (SB) of calculating at least one of the relative velocity (v) and the distance (L) by a time interval method; and
a second operating (S4) step of calculating at least one of the relative velocity (v) and the distance (L) by a second method different from the time interval method.

# FIG. 1

TWO-FREQUENCY CW RADAR

# FIG. 2

Smix

S△f1

S△f2

## FIG. 3

Sa — OBTAIN WAVEFORM

SΔf1
SΔf2

VOLTAGE / TIME

Sb — DETECT DOPPLER FREQUENCIES Δf1 AND Δf2 AND PHASE DIFFERENCE φ1 - φ2 BY FFT METHOD

Sc — CALCULATE DISTANCE L AND RELATIVE VELOCITY v

*FIG. 4*

SΔf1

SΔf2

# FIG. 5

SA

OBTAIN WAVEFORM

SB

DETECT DOPPLER FREQUENCIES $\Delta f1$ AND $\Delta f2$ AND PHASE DIFFERENCE $\phi1 - \phi2$ BY TIME INTERVAL METHOD

DETECT PHASE DIFFERENCE $\phi1 - \phi2$ FROM RISING TIME DIFFERENCE

DETECT DOPPLER FREQUENCIES $\Delta f1$ AND $\Delta f2$ FROM CYCLE PERIOD

SC

CALCULATE DISTANCE L AND RELATIVE VELOCITY v

EP 1 956 389 A1

# FIG. 6

SB

DETECT DOPPLER FREQUENCIES $\Delta f1$ AND $\Delta f2$ AND
PHASE DIFFERENCE $\phi1 - \phi2$ BY TIME INTERVAL METHOD

VOLTAGE

PREDETERMINED
VOLTAGE VALUE

$S\Delta f1$

TIME

VOLTAGE

PREDETERMINED
VOLTAGE VALUE

$S\Delta f2$

TIME

DETECT PHASE
DIFFERENCE $\phi1 - \phi2$
FROM DIFFERENCE
IN TIME AT WHICH
BOTH SIGNALS CROSS
PREDETERMINED
VOLTAGE VALUE

DETECT DOPPLER
FREQUENCIES
$\Delta f1$ AND $\Delta f2$ FROM
DIFFERENCE IN
TIME AT WHICH
SIGNAL CROSSES
PREDETERMINED
VOLTAGE VALUE

# FIG. 7

EP 1 956 389 A1

FIG. 8

SΔfa

SΔfb

SΔf

22

# FIG. 9

# FIG. 10

```
( START CALCULATION CONTROL SECTION )
                    │
                    ▼
        ┌──────────────────────────────┐   S1
        │   OBTAIN SIGNAL WAVEFORM FROM │
        │     A/D CONVERTING SECTION    │
        └──────────────────────────────┘
                    │
                    ▼
YES   ╱ DOES THE SIGNAL WAVEFORM HAVE POWER ╲   S2
◄─────  HIGHER THAN PREDETERMINED POWER?
      ╲  (IS SIGNAL WAVEFORM SATURATED?)   ╱
                    │ NO
                    ▼
YES   ╱ HAS CALCULATED DISTANCE BECOME ╲  S3   NO
◄─────    LOWER THAN THRESHOLD?        ╱ ────────┐
                    │                            │
                    │                            ▼
                    │          ┌────────────────────────────────┐  S4
                    │          │ CALCULATE DISTANCE BY FFT METHOD│
                    │          │   (DISABLE DISTANCE CALCULATING │
                    │          │ OPERATION BY TIME INTERVAL METHOD)│
                    │          └────────────────────────────────┘
                    ▼
        ┌──────────────────────────────┐   S5
        │  CALCULATE DISTANCE BY FFT METHOD│
        │     AND TIME INTERVAL METHOD  │
        └──────────────────────────────┘
                    │
                    ▼
        ┌──────────────────────────────┐   S6
        │ SELECT ONE OF DISTANCES BY FFT METHOD│
        │ AND TIME INTERVAL METHOD AS DISTANCE │
        │           TO BE OUTPUT        │
        └──────────────────────────────┘
                    │
                    ▼
        ┌──────────────────────────────┐   S7
        │    OUTPUT CALCULATED DISTANCE │
        └──────────────────────────────┘
                    │
                    ▼
NO    ╱ HAS INSTRUCTION TO TERMINATE PROCESS ╲  S8
◄─────         BEEN GIVEN?                    ╱
                    │ YES
                    ▼
              (    END    )
```

24

EP 1 956 389 A1

# FIG. 11

24 — OPERATION CONTROL SECTION

23 — A/D CONVERTING SECTION

51 — FFT-METHOD CALCULATING SECTION

52 — CALCULATION-EXECUTION DETERMINATION SECTION

53 — TIME-INTERVAL-METHOD CALCULATING SECTION

54 — CALCULATION SELECTING SECTION

55 — CALCULATION OUTPUT SECTION

# FIG. 12

OPERATION CONTROL SECTION — 124

15, 14, 13 BRANCHING SECTION, 12, 11

3 OBJECT, Ss, L, V, Sr

16, 17, 18, Smix, 19 SWITCHING TIMING SECTION, 20

21-1, 22-1, SΔf1, 23 A/D CONVERTING SECTION

21-2, 22-2, SΔf2

51 FFT-METHOD CALCULATING SECTION

54 CALCULATION SELECTING SECTION

55 CALCULATION OUTPUT SECTION

131, 132, 133 DIGITAL INPUT SECTION

53 TIME-INTERVAL-METHOD CALCULATING SECTION

52 CALCULATION-EXECUTION DETERMINATION SECTION

100 ~ TWO-FREQUENCY CW RADAR

EP 1 956 389 A1

# FIG. 13

EP 1 956 389 A1

```
    201              202              203
┌──────────┐   ┌──────────┐   ┌──────────┐
│   CPU    │   │   ROM    │   │   RAM    │
└──────────┘   └──────────┘   └──────────┘                204
```

INPUT/OUTPUT INTERFACE ~205

| INPUT SECTION | OUTPUT SECTION | STORAGE SECTION | COMMUNICATING SECTION | DRIVE ~210 |

206    207    208    209

REMOVABLE MEDIUM ~211

**European Patent Office**

## EUROPEAN SEARCH REPORT

Application Number

EP 08 15 0801

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | DE 10 2005 008715 A1 (BOSCH GMBH ROBERT [DE]) 31 August 2006 (2006-08-31)<br>* the whole document * | 1,2,6-8, 10<br>3-5,9 | INV.<br>G01S13/58<br>G01S13/34<br>G01S13/38<br>G01S13/93 |
| Y | US 3 952 303 A (WATANABE MASAHIRO ET AL) 20 April 1976 (1976-04-20)<br>* column 1, lines 5,6 *<br>* column 2, line 38 - column 6, line 28; figure 2 *<br>* column 10, line 24 - column 11, line 14; figure 6 * | 3,5,9 | |
| Y | WO 92/19980 A (IVHS TECHNOLOGIES INC [US]) 12 November 1992 (1992-11-12)<br>* page 15, lines 7-20; figure 6 *<br>* page 24, line 20 - page 26, line 7 * | 4 | |
| X | EP 1 385 021 A (HITACHI LTD [JP]) 28 January 2004 (2004-01-28)<br>* paragraphs [0028] - [0052], [0077] - [0100], [0108] * | 1,7,10 | |
| P,A | EP 1 837 678 A (OMRON TATEISI ELECTRONICS CO [JP]) 26 September 2007 (2007-09-26)<br>* paragraphs [0034] - [0054], [0085] - [0087]; figures 1-4 * | 1-10 | TECHNICAL FIELDS SEARCHED (IPC)<br><br>G01S |
| A | EP 1 548 458 A (HITACHI LTD [JP]) 29 June 2005 (2005-06-29)<br>* paragraphs [0002] - [0006], [0009], [0010], [0020], [0023] - [0027]; figures 2,4A,4B * | 1-10 | |
| A | DE 103 50 553 A1 (BOSCH GMBH ROBERT [DE]) 2 June 2005 (2005-06-02)<br>* paragraphs [0032] - [0060]; figure 1 * | 1-10 | |

-/--

The present search report has been drawn up for all claims

| Place of search | Date of completion of the search | Examiner |
|---|---|---|
| Munich | 6 June 2008 | Schmelz, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 08 15 0801

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 0 367 404 A (DELCO ELECTRONICS CORP [US]) 9 May 1990 (1990-05-09) * column 4, line 56 - column 7, line 9; figure 4 * ----- | 1-10 | |
| A | WO 98/32028 A (NORTHROP GRUMMAN CORP [US]) 23 July 1998 (1998-07-23) * the whole document * ----- | 1-10 | |
| A | EP 1 528 406 A (HITACHI LTD [JP]) 4 May 2005 (2005-05-04) * the whole document * ----- | 1-10 | |
| A | US 3 750 171 A (FARIS W) 31 July 1973 (1973-07-31) * the whole document * ----- | 1-10 | |
| | | | TECHNICAL FIELDS SEARCHED (IPC) |

The present search report has been drawn up for all claims

| Place of search | Date of completion of the search | Examiner |
|---|---|---|
| Munich | 6 June 2008 | Schmelz, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 15 0801

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2008

| Patent document cited in search report | | Publication date | Patent family member(s) | | Publication date |
|---|---|---|---|---|---|
| DE 102005008715 | A1 | 31-08-2006 | EP 1856555 A1 | | 21-11-2007 |
| | | | WO 2006089841 A1 | | 31-08-2006 |
| US 3952303 | A | 20-04-1976 | CA 1016630 A1 | | 30-08-1977 |
| | | | JP 49107491 A | | 12-10-1974 |
| WO 9219980 | A | 12-11-1992 | AT 223067 T | | 15-09-2002 |
| | | | AU 668874 B2 | | 23-05-1996 |
| | | | AU 2247292 A | | 21-12-1992 |
| | | | AU 693035 B2 | | 18-06-1998 |
| | | | AU 6422796 A | | 24-10-1996 |
| | | | BR 9205972 A | | 02-08-1994 |
| | | | CA 2102101 A1 | | 07-11-1992 |
| | | | DE 69232751 D1 | | 02-10-2002 |
| | | | DE 69232751 T2 | | 28-05-2003 |
| | | | EP 0583418 A1 | | 23-02-1994 |
| | | | JP 3203600 B2 | | 27-08-2001 |
| | | | JP 5508479 T | | 25-11-1993 |
| EP 1385021 | A | 28-01-2004 | JP 3964362 B2 | | 22-08-2007 |
| | | | JP 2004069693 A | | 04-03-2004 |
| | | | US 2005242986 A1 | | 03-11-2005 |
| EP 1837678 | A | 26-09-2007 | JP 2007256095 A | | 04-10-2007 |
| | | | US 2007222670 A1 | | 27-09-2007 |
| EP 1548458 | A | 29-06-2005 | JP 2005156337 A | | 16-06-2005 |
| | | | US 2005110673 A1 | | 26-05-2005 |
| DE 10350553 | A1 | 02-06-2005 | FR 2861849 A1 | | 06-05-2005 |
| | | | GB 2408163 A | | 18-05-2005 |
| | | | US 2005116855 A1 | | 02-06-2005 |
| EP 0367404 | A | 09-05-1990 | CA 2000166 A1 | | 01-05-1990 |
| | | | DE 68913423 D1 | | 07-04-1994 |
| | | | DE 68913423 T2 | | 01-06-1994 |
| | | | ES 2049823 T3 | | 01-05-1994 |
| | | | JP 2181686 A | | 16-07-1990 |
| | | | US 4893125 A | | 09-01-1990 |
| WO 9832028 | A | 23-07-1998 | DE 69834711 T2 | | 24-05-2007 |
| | | | EP 0954757 A1 | | 10-11-1999 |
| | | | JP 2001509896 T | | 24-07-2001 |
| | | | US 5828333 A | | 27-10-1998 |
| EP 1528406 | A | 04-05-2005 | JP 2005134266 A | | 26-05-2005 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 08 15 0801

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2008

| Patent document cited in search report | | Publication date | Patent family member(s) | | Publication date |
|---|---|---|---|---|---|
| EP 1528406 | A | | US 2005093736 A1 | | 05-05-2005 |
| US 3750171 | A | 31-07-1973 | CA | 950566 A1 | 02-07-1974 |
| | | | DE | 2137206 A1 | 13-04-1972 |
| | | | FR | 2107914 A5 | 12-05-1972 |
| | | | GB | 1312215 A | 04-04-1973 |
| | | | JP | 51014873 B | 12-05-1976 |

EPO FORM P0459

For more details about this annex : see Official Journal of the European Patent Office, No. 12/82

**EP 1 956 389 A1**

## REFERENCES CITED IN THE DESCRIPTION

### Patent documents cited in the description

- JP 3203600 B

- JP 2004069693 A